# EUROPÄISCHE PATENTANMELDUNG

(11) **EP 4 806 840 A1**
(43) Veröffentlichungstag der Anmeldung: **16.09.2026**
(21) Anmeldenummer: 25162792.3
(22) Anmeldetag: 11.03.2025
(51) Int. Cl.: C01B 3/04

(54) **VERFAHREN UND VORRICHTUNG ZUR THERMISCHEN SPALTUNG VON AMMONIAK**

(71) Anmelder: Linde GmbH, 82049 Pullach (DE)
(72) Erfinder: Behrens, Axel, 82049 Pullach (DE); Wellenhofer, Anton, 82049 Pullach (DE); Reinke, Michael, 82049 Pullach (DE); Rieth, Wilhelm, 82266 Inning-Buch (DE); Pöllmann, Josef, 81829 München (DE)
(74) Vertreter: Fischer, Werner

(57) **Zusammenfassung**

Die Erfindung betrifft ein Verfahren sowie eine Vorrichtung zur Erzeugung eines wasserstoffhaltigen Produktgases (6), bei dem im Normalbetrieb ein Ammoniak enthaltender Einsatzstoff (1) in die mit Katalysatormaterial gefüllten, in einem brennerbeheizten Feuerraum angeordneten Spaltrohre (R) eines Spaltreaktors (S) geleitet wird, um Ammoniak bei einem Spaltdruck und einer Spalttemperatur mit katalytischer Unterstützung thermisch zu spalten und ein Wasserstoff, Stickstoff und Ammoniak umfassendes Spaltgas (3) zu erhalten, das nach Abkühlung in einem Spaltgaskühler (K) zum Produktgas (6) aufbereitet wird. Kennzeichnend hierbei ist, dass bei einer ungeplanten Unterbrechung der Einsatzstoffzufuhr zumindest ein Teil (8) des im Spaltgaskühler (K) abgekühlten Spaltgases (5) zurückgeführt und durch die Spaltrohre (R) des Spaltreaktors (S) geleitet wird.

## Beschreibung

Die Erfindung betrifft ein Verfahren zur Erzeugung eines wasserstoffhaltigen Produktgases, bei dem im Normalbetrieb ein Ammoniak enthaltender Einsatzstoff in die mit Katalysatormaterial gefüllten, in einem brennerbeheizten Feuerraum angeordneten Spaltrohre eines Spaltreaktors geleitet wird, um Ammoniak bei einem Spaltdruck und einer Spalttemperatur mit katalytischer Unterstützung thermisch zu spalten und ein Wasserstoff, Stickstoff und Ammoniak umfassendes Spaltgas zu erhalten, das nach Abkühlung in einem Spaltgaskühler zum Produktgas aufbereitet wird.

Weiterhin betrifft die Erfindung eine Vorrichtung zur Durchführung des erfindungsgemäßen Verfahrens.

Die katalytisch unterstütze thermische Spaltung von Ammoniak ist bekannt und seit vielen Jahren Stand der Technik. Die dabei ablaufende Reaktion

2NH₃ ↔ N₂ + 3H₂

ist endotherm (ΔH=46,2kJ/mol). Die Lage des Reaktionsgleichgewichts verschiebt sich mit fallendem Druck und steigender Temperatur zur Produktseite.

Zur industriellen Ammoniakspaltung können ähnliche Anlagen eingesetzt werden, wie sie heute zur großtechnischen Synthesegaserzeugung durch Dampfreformierung von Kohlenwasserstoffen verwendet werden. Derartige Anlagen umfassen einen Reaktor (Spaltreaktor bzw. Dampfreformer) mit einem Feuerraum, in dem mit Katalysatormaterial gefüllte Reaktorrohre (Spaltrohre bzw. Reformerrohre) angeordnet sind, sowie ein Abhitzesystem. Der Feuerraum wird durch wenigstens einen Brenner beheizt, der Wärme für die endotherm ablaufenden Umsetzung (Ammoniakspaltung bzw. Dampfreformierung) der in den Reaktorrohre eingesetzten Stoffe (Ammoniak bzw. Kohlenwasserstoffe und Dampf) liefern.

Um das wasserstoffhaltige Produktgas, bei dem es sich beispielsweise um Reinwasserstoff oder Formiergas handeln kann, ohne oder mit nur geringem Verdichtungsaufwand abgeben zu können, wird die Ammoniakspaltung zweckmäßigerweise bei einem Druck (Spaltdruck) durchgeführt, der zwischen 20 und 40bar liegt. Dies ist umso einfacher möglich, als das für die Spaltung bestimmte Ammoniak gewöhnlich flüssig zur Verfügung steht, so dass sein Druck mit wenig Energieeinsatz erhöht werden kann. Damit unter diesen Bedingungen ein ausreichend hoher, wirtschaftlich sinnvoller Umsetzungsgrad des eingesetzten Ammoniaks erreicht wird, ist es notwendig, die Spaltung bei hohen Temperaturen zwischen ca. 500 und 1000°C durchzuführen.

Das aus dem Spaltreaktor austretende Spaltgas besteht zu einem großen Teil aus Wasserstoff und Stickstoff, enthält daneben aber auch nicht umgesetztes Ammoniak sowie Wasser, das bereits in dem kommerziell verfügbaren, gewöhnlich zur Ammoniakspaltung eingesetzten Ammoniak (anhydrous ammonia) in einer Konzentration zwischen 0,2 und 0,5Gew.-% vorliegt.

Zur Gewinnung eines wasserstoffhaltigen Produktgases wird das heiße Spaltgas zunächst in einer als Spaltgaskühler bezeichneten Kühleinrichtung abgekühlt, ehe Ammoniak, Wasser und ggf. Stickstoff durch einen oder mehrere adsorptive Trennschritte, denen eine Wasserwäsche zur Entfernung von Ammoniak vorangehen kann, abgetrennt werden.

Gewöhnlich umfasst eine Anlage zur Ammoniakspaltung eine lediglich für den Anfahrbetrieb benötigte Recycleeinrichtung, die den Spaltgaskühler austrittseitig über einen Verdichter (Anfahr-Recycleverdichter) so mit der Eintrittsseite des Spaltreaktors verbindet, dass ein aus den Spaltrohren austretender Stoffstrom, der den an das im Normalbetrieb erzeugte Spaltgas gestellten Anforderungen nicht genügt, nach seiner Abkühlung zurückgeführt und wieder in die Reaktorrohre eingeleitet werden kann.

Als Reaktionspartner für die Kohlenwasserstoffe und zur Unterdrückung der Rußbildung wird bei der Dampfreformierung Wasserdampf eingesetzt, der bei einer ungeplanten, etwa durch eine technische Störung bedingten Unterbrechung der Kohlenwasserstoffzufuhr weiterhin durch die im Feuerraum angeordneten Reaktorrohre geführt werden kann, um diese auf einer für das eingesetzte Rohrmaterial unkritischen Temperatur zu halten.

Für die Ammoniakspaltung ist Wasserdampf weder als Reaktionspartner noch zur Unterdrückung einer Rußbildung erforderlich. Die Temperatur der Spaltrohre wird während des Normalbetriebs durch die für die Aufheizung des Ammoniakeinsatzes sowie die endotherme Spaltreaktion benötigte Wärmemenge auf einen unkritischen Wert begrenzt. Da Wasserdampf als Kühlmedium nicht zur Verfügung steht, besteht bei einer ungeplanten Unterbrechung der Einsatzstoffzufuhr somit die große Gefahr einer Überhitzung und Beschädigung der als Spaltrohre bezeichneten Reaktorrohre, die auch nach einem unverzüglichen Abschalten der Brenner durch die von den Feuerraumwänden abgestrahlte Wärme beheizt werden.

Aufgabe der Erfindung ist es, ein Verfahren der gattungsgemäßen Art sowie eine Vorrichtung zu dessen Durchführung anzugeben, die im Fall einer ungeplanten Unterbrechung der Einsatzstoffzufuhr eine Kühlung der Spaltrohre ermöglichen.

Die gestellte Aufgabe wird verfahrensseitig erfindungsgemäß dadurch gelöst, dass bei einer ungeplanten Unterbrechung der Einsatzstoffzufuhr zumindest ein Teil des im Spaltgaskühler abgekühlten Spaltgases zurückgeführt und durch die Spaltrohre des Spaltreaktors geleitet wird.

Ungeplant ist eine Unterbrechung der Einsatzstoffzufuhr, wenn sie etwa aufgrund einer Störung oder eines Notfalls ohne oder nur mit einer sehr kurzen Vorwarnzeit eintritt, so dass ein geregeltes Abfahren der zur Ammoniakspaltung eingesetzten Einrichtung nicht möglich ist.

Das abgekühlt zurückgeführte Spaltgas nimmt die über die heißen Feuerraumwände und ggf. die Brenner den Spaltrohren zugeführte Wärme auf und gibt sie nachfolgend an den Spaltgaskühler ab, wobei erneut ein abgekühltes Spaltgas entsteht, das bei Bedarf wieder in die Spaltrohe zurückgeführt werden kann. Zweckmäßigerweise wird nicht mehr des abgekühlten Spaltgases zurückgeführt, als notwendig ist, um die Spaltrohre auf einer unkritischen Temperatur zu halten, bei der sich die mechanischen Eigenschaften der Spaltrohre im Vergleich zum Normalbetrieb nicht verschlechtern. Bei seinem Einsatz zur Kühlung der Spaltrohre verändert sich die chemische Zusammensetzung des Spaltgases nicht oder nur unwesentlich, so dass es nach Beendigung der Einsatzstoffunterbrechung problemlos zum Produktgas weiterverarbeitet werden kann.

Um den Spaltofen nach dem Ende der ungeplanten Unterbrechung der Einsatzstoffzufuhr möglichst schnell wieder zurück in den Normalbetrieb versetzen zu können, sieht eine Ausgestaltung des erfindungsgemäßen Verfahrens vor, das abgekühlt zurückgeführte Spaltgas mit einem Druck in die Spaltrohre einzuleiten, der dem Druck entspricht, mit dem der Ammoniak enthaltene Einsatzstoff während des Normalbetriebs den Spaltrohren zugeführt wird, so dass es mit einem Druck in den Spaltrohren vorliegt, der um nicht mehr als 60% niedriger als der Spaltdruck während des Normalbetriebs ist.

Sinnvollerweise wird auch die Temperatur der Spaltrohre auf einer Temperatur gehalten, die der Spalttemperatur während des Normalbetriebs entspricht oder nur geringfügig von dieser abweicht.

Eine bevorzugte Ausgestaltung des erfindungsgemäßen Verfahrens sieht vor, dass der Anfahr-Recycleverdichter dazu eingesetzt wird, um das im Spaltgaskühler abgekühlte Spaltgas vor den Spaltreaktor zurückzuführen.

Die zur Durchführung des erfindungsgemäßen Verfahrens geeignete Vorrichtung, die ebenfalls Gegenstand der Erfindung ist, umfasst einen Spaltreaktor mit einem brennerbeheizten Feuerraum, in dem mit Katalysatormaterial gefüllte Spaltrohre angeordnet sind, in die im Normalbetrieb ein weitgehend aus Ammoniak bestehender Einsatzstoff eingeleitet werden kann, um Ammoniak bei einem Spaltdruck und einer Spalttemperatur mit katalytischer Unterstützung zu spalten und ein Wasserstoff, Stickstoff und Ammoniak umfassendes Spaltgas zu erhalten, einen Spaltgaskühler zur Abkühlung des im Spaltreaktor erhältlichen Spaltgases, sowie eine Trenneinrichtung, mit der das abgekühlte Spaltgas zu einem wasserstoffhaltigen Produktgas aufbereitet werden kann.

Vorrichtungsseitig wird die gestellte Aufgabe dadurch gelöst, dass der Spaltgaskühler über eine Rückführeinrichtung so mit dem Spaltreaktor verbunden ist, dass bei einer Unterbrechung der Einsatzstoffzufuhr zumindest ein Teil des im Spaltgaskühler abgekühlt erhältlichen Spaltgases vor den Spaltreaktor zurückgeführt und durch die Spaltrohre geleitet werden kann, um diese zu kühlen.

Vorzugsweise ist die Rückführeinrichtung mit einem Rückführverdichter ausgeführt, mit dem das abgekühlt zurückzuführende Spaltgas so weit verdichtet werden kann, dass es mit einem Druck in den Spaltrohren vorliegt, der um nicht mehr als 60% niedriger als der Spaltdruck während des Normalbetriebs ist.

Besonders bevorzugt handelt es sich bei dem Rückführverdichter um einen Anfahr-Recycleverdichter, der während des Anfahrens des Spaltreaktors zum Antrieb eines Gasrecycles einsetzbar ist.

Der Anfahr-Recycleverdichter einer gattungsgemäßen Vorrichtung ist gewöhnlich für einen deutlich geringeren Ausgangsdruck als den Spaltdruck, mit dem die Spaltrohre während des Normalbetriebs beaufschlagt werden, ausgelegt. Um für einen Einsatz als Rückführverdichter geeignet zu sein, muss der Anfahr-Recycleverdichter für einen höheren, im Bereich des Spaltdrucks liegenden Ausgangsdruck ausgelegt sein. Hierdurch wird der Anfahr-Recycleverdichter gegenüber dem Stand der Technik zwar geringfügig teurer, jedoch wird dieser Nachteil durch seine Doppelnutzung ausgeglichen.

Die Erfindung ermöglicht es, bei einer ungeplanten Unterbrechung der Einsatzstoffzufuhr auf Kühlmittel wie Stickstoff oder Dampf zu verzichten, die mit erheblichem apparativem und finanziellem Aufwand von der Anlagengrenze importiert werden müssten. Durch die Rückführung des abgekühlten Spaltgases mit einem Druck im Bereich des Spaltdrucks ist ein schnelles Wiederanfahren der Anlage möglich. Im Unterschied zum Stand der Technik muss der Druck in den Spaltrohren nach dem Ende der Einsatzstoffunterbrechung nicht erst langsam hochgefahren werden Das Spaltgas kann daher wesentlich schneller mit der geforderten Spezifikation erhalten werden, wodurch sich Fackelverluste deutlich reduzieren.

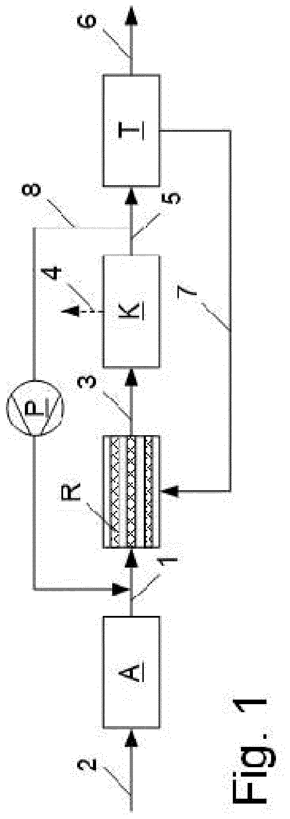

Im Folgenden soll die Erfindung anhand eines in der **Figur 1** schematisch dargestellten Ausführungsbeispiels näher erläutert werden.

Die Figur 1 zeigt eine bevorzugte Ausgestaltung der erfindungsgemäßen Vorrichtung.

Um zu einem gasförmigen, Ammoniak enthaltenden Einsatzstoff 1 für den mit einem über Brenner beheizten Feuerraum ausgeführten Spaltreaktor S aufbereitet zu werden, wird während des Normalbetriebs flüssiges Ammoniak 2 der Einsatzaufbereitung A zugeführt, wo es verdampft, überhitzt und ggf. einer Vorspaltung unterzogen wird. In den im Feuerraum angeordneten Spaltrohren R des Spaltreaktor S wird der größte Teil des im Ammoniak enthaltenden Einsatz 1 vorliegenden Ammoniaks mit katalytischer Unterstützung bei einem Spaltdruck zwischen 20 und 40 bar und Spalttemperaturen von bis zu 1000°C in Wasserstoff und Stickstoff gespalten, so dass ein heißes, weitgehend aus Wasserstoff und Stickstoff bestehendes und Reste von Ammoniak enthaltendes Spaltgas 3 entsteht. Im Spaltgaskühler K wird dem heißen Spaltgas 3 Wärme 4 entzogen, wobei ein abgekühltes Spaltgas 5 erhalten wird, das in der Trenneinrichtung T, die beispielsweise einen Druckwechseladsorber umfasst, in das wasserstoffhaltige Produktgas 6 sowie Wasserstoff, Ammoniak, Sickstoff sowie ggf. Wasser enthaltendes Restgas 7 getrennt wird, das den Brennern des Spaltreaktors S als Brennstoff dient.

Wird beispielsweise aufgrund einer Anlagenstörung die Einsatzstoffzufuhr zum Spaltreaktor S ungeplant unterbrochen, besteht die Gefahr einer Überhitzung und Beschädigung der Spaltrohre R, da selbst dann, wenn die Brenner sofort abgestellt werden, die Wände des Feuerraums Hochtemperaturhitze abstrahlen. Um Wärme abzuführen und die Spaltrohre R auf einer Temperatur zu halten, bei der sie keinen Schaden nehmen, wird zumindest ein Teil 8 des abgekühlten Spaltgases 5 über den Rückführverdichter P vor den Spaltreaktor S zurückgeführt und in die Spaltrohre R eingeleitet. Der Rückführverdichter P, der während des Anfahrens der Anlage auch als Anfahr-Recycleverdichter eingesetzt werden kann, komprimiert das abgekühlt zurückgeführte Spaltgas 8 so weit, dass die Spaltrohre R auf dem Spaltdruck gehalten werden können, wodurch das Wiederanfahren der Anlage nach dem Ende der Einsatzstoffunterbrechung beschleunigt wird.

## Patentansprüche

1. Verfahren zur Erzeugung eines wasserstoffhaltigen Produktgases (6), bei dem im Normalbetrieb ein Ammoniak enthaltender Einsatzstoff (1) in die mit Katalysatormaterial gefüllten, in einem brennerbeheizten Feuerraum angeordneten Spaltrohre (R) eines Spaltreaktors (S) geleitet wird, um Ammoniak bei einem Spaltdruck und einer Spalttemperatur mit katalytischer Unterstützung thermisch zu spalten und ein Wasserstoff, Stickstoff und Ammoniak umfassendes Spaltgas (3) zu erhalten, das nach Abkühlung in einem Spaltgaskühler (K) zum Produktgas (6) aufbereitet wird, **dadurch gekennzeichnet, dass** bei einer ungeplanten Unterbrechung der Einsatzstoffzufuhr zumindest ein Teil (8) des im Spaltgaskühler (K) abgekühlten Spaltgases (5) zurückgeführt und durch die Spaltrohre (R) des Spaltreaktors (S) geleitet wird.

2. Verfahren nach Anspruch 1, **dadurch gekennzeichnet, dass** der Druck in den Spaltrohren (R) auf einen Wert eingestellt wird, der um nicht mehr als 60% niedriger als der Wert des Spaltdrucks während des Normalbetriebs ist.

3. Verfahren nach einem der Ansprüche 1 oder 2, **dadurch gekennzeichnet, dass** das abgekühlte Spaltgas (8) vor den Spaltreaktor (S) mit Hilfe eines Verdichters (P) zurückgeführt wird, der während des Anfahrens des Spaltreaktors (S) einen Gasrecycle antreibt.

4. Verfahren nach einem der Ansprüche 1 bis 3, **dadurch gekennzeichnet, dass** die Beheizung des Feuerraums des Spaltreaktors (S) unterbrochen wird.

5. Vorrichtung zur Erzeugung eines wasserstoffhaltigen Produktgases (6), umfassend einen Spaltreaktor (S) mit einem brennerbeheizten Feuerraum, in dem mit Katalysatormaterial gefüllte Spaltrohre (R) angeordnet sind, in die im Normalbetrieb ein weitgehend aus Ammoniak bestehender Einsatzstoff (1) eingeleitet werden kann, um Ammoniak bei einem Spaltdruck und einer Spalttemperatur mit katalytischer Unterstützung zu spalten und ein Wasserstoff, Stickstoff und Ammoniak umfassendes Spaltgas (3) zu erhalten, einen Spaltgaskühler (K) zur Abkühlung des im Spaltreaktor (S) erhältlichen Spaltgases (3), sowie eine Trenneinrichtung (T), mit der das abgekühlte Spaltgas (5) zu einem wasserstoffhaltigen Produktgas (6) aufbereitet werden kann, **dadurch gekennzeichnet, dass** der Spaltgaskühler (K) über eine Rückführeinrichtung (P) so mit dem Spaltreaktors (S) verbunden ist, dass bei einer Unterbrechung der Einsatzstoffzufuhr zumindest ein Teil (8) des im Spaltgaskühler (K) abgekühlt erhältlichen Spaltgases (5) vor den Spaltreaktor (S) zurückgeführt und durch die Spaltrohre (R) geleitet werden kann.

6. Vorrichtung nach Anspruch 5, **dadurch gekennzeichnet, dass** die Rückführeinrichtung mit einem Rückführverdichter (P) ausgeführt ist, mit dem das abgekühlt zurückzuführende Spaltgas (8) so weit verdichtet werden kann, dass es mit einem Druck in den Spaltrohren (R) vorliegt, der um nicht mehr als 60% niedriger als der Spaltdruck während des Normalbetriebs ist.

7. Vorrichtung nach Anspruch 6, **dadurch gekennzeichnet, dass** der Rückführverdichter als Anfahr-Recycleverdichter einsetzbar ist, der während des Anfahrens des Spaltreaktors (S) einen Gasrecycle antreiben kann.
